# EUROPÄISCHE PATENTANMELDUNG

(11) **EP 3 098 481 A1**
(43) Veröffentlichungstag der Anmeldung: **30.11.2016**
(21) Anmeldenummer: 15166945.4
(22) Anmeldetag: 08.05.2015
(51) Int. Cl.: F16H 57/08, F03D 15/00, F16C 17/04

(54) **PLANETENGETRIEBE FÜR EINE WINDKRAFTANLAGE UND WINDKRAFTANLAGE MIT EINEM PLANETENGETRIEBE**

(71) Anmelder: Siemens Aktiengesellschaft, 80333 München (DE)
(72) Erfinder: Boland, Thomas, 46399 Bocholt (DE)

(57) **Zusammenfassung**

Die Erfindung ist ein Planetengetriebe (10) für eine Windkraftanlage und eine Windkraftanlage mit einem Planetengetriebe (10) sowie ein Verfahren zum Montieren eines Planetengetriebes (10), wobei das Planetengetriebe (10) einen Planetenträger (12) mit zwei jeweils zumindest einen Planetenradbolzen (18) fixierenden Planetenträgerwangen (14, 16) umfasst, wobei der oder jeder Planetenradbolzen (18) ein Planetenrad (20) trägt, wobei zwischen dem Planetenrad (20) und jeweils einer Planetenträgerwange (14, 16) jeweils ein als Axialgleitlager fungierender Lagerring (26, 28) angeordnet ist und wobei jeder Lagerring (26, 28) in einem aufgrund einer reduzierten Breite des Planetenrads (20) resultierenden Axiallagerraum (30) angeordnet ist.

## Beschreibung

Die Erfindung betrifft ein Planetengetriebe für eine Windkraftanlage sowie im Weiteren auch eine Windkraftanlage mit einem Planetengetriebe.

Ein Planetengetriebe umfasst bekanntlich einen Planetenträger und zwei jeweils zumindest einen Planetenradbolzen fixierende Planetenträgerwangen. Der oder jeder Planetenradbolzen trägt ein Planetenrad. Als Axialgleitlager des Planetenrads fungieren zwei zwischen dem Planetenrad und jeweils einer Planetenträgerwange angeordnete Lagerringe.

Diese Lagerringe erfordern für ihre Anbringung Bauraum (Axiallagerraum) im Planetengetriebe. Bisher, zum Beispiel bei Ausführungsformen wie in der EP 2 383 480 A1 oder der US 2013/217535 A1 beschrieben, wird dieser Axiallagerraum durch eine vergleichsweise aufwändige, spanende Zusatzbearbeitung des Planetenträgers geschaffen. Das dabei erfolgende Abtragen der Planetenträgerwangen resultiert in einer verringerten Einspannlänge des Planetenbolzens im Planetenträger. Dadurch sinken die mechanische Belastbarkeit der Fixierung des Planetenbolzens im Planetenträger und die mechanische Belastbarkeit des Planetenträgers insgesamt. Die Fertigungskosten steigen aufgrund der notwendigen Bearbeitung des Planetenträgers deutlich.

Eine Aufgabe der vorliegenden Erfindung besteht ausgehend hiervon darin, ein Planetengetriebe der eingangs genannten Art anzugeben, bei dem die vorstehend skizzierten Nachteile vermieden werden, zumindest aber deren Auswirkungen reduziert sind.

Diese Aufgabe wird erfindungsgemäß mittels eines Planetengetriebes für eine Windkraftanlage mit den Merkmalen des Anspruchs 1 gelöst. Dabei ist bei einem Planetengetriebe für eine Windkraftanlage, das in grundsätzlich an sich bekannter Art und Weise einen Planetenträger und zwei jeweils zumindest einen Planetenradbolzen fixierende Planetenträgerwangen umfasst, wobei der oder jeder Planetenradbolzen ein Planetenrad trägt und wobei zwischen dem Planetenrad und jeweils einer Planetenträgerwange jeweils ein als Axialgleitlager fungierender Lagerring angeordnet ist, vorgesehen, dass jeder Lagerring in einem aufgrund einer reduzierten Breite des Planetenrads resultierenden Axiallagerraum angeordnet ist.

Bisher, zum Beispiel bei einer Ausführungsform eines Planetengetriebes gemäß der EP 2 383 480 A1, entspricht eine lichte Weite zwischen den beiden einander zugewandten Seiten der Planetenträgerwangen in etwa der Summe der Breite eines Planetenrads zuzüglich der Stärke der beiden zwischen Planetenrad und jeweils einer Planetenträgerwange angeordneten Lagerringe.

Bei dem hier vorgeschlagenen Planetengetriebe entspricht die lichte Weite zwischen den beiden Seiten der Planetenträgerwangen in etwa der Breite eines Planetenrads. Bei gleicher Breite des Planetenrads ist bei dem hier vorgeschlagenen Planetengetriebe demgemäß der Abstand zwischen den beiden Seiten der Planetenträgerwangen geringer. Der geringere Abstand ergibt sich aufgrund einer erhöhten Stärke der Planetenträgerwangen.

Mit Bezug auf die bisherige Lösung ergibt sich der dortige größere Abstand aufgrund einer reduzierten Stärke der Planetenträgerwangen mit den damit einhergehenden Effekten der reduzierten mechanischen Belastbarkeit des Planetenträgers und der schwächeren Fixierung des Planetenbolzens aufgrund der resultierenden reduzierten Einspannlänge. Dies ist bei dem hier vorgeschlagenen Planetengetriebe vermieden. Die erhöhte Stärke der Planetenträgerwangen führt zu einer erhöhten mechanischen Festigkeit des Planetenträgers insgesamt und zu einer erhöhten Einspannlänge des Planetenbolzens.

Dies wird möglich, indem jeder Lagerring in einem aufgrund einer reduzierten Breite des Planetenrads resultierenden Axiallagerraum angeordnet ist. Anders als bisher (EP 2 383 480 A1) wird also der Axiallagerraum nicht im Planetenträger, sondern im Planetenrad gebildet.

Die verringerte Breite des Planetenrads führt anders als eine verringerte Stärke des üblicherweise als Gussteil ausgeführten Planetenträgers nicht im selben Umfang zu einer reduzierten mechanischen Festigkeit des Planetenrads.

Vorteilhafte Ausgestaltungen der Erfindung sind Gegenstand der Unteransprüche.

Bei einer Ausführungsform des Planetengetriebes beginnt der Axiallagerraum ausgehend von einem kleinsten Radius des Planetenrads. Die vereinfacht die Herstellung des Planetenrads.

Bei einer weiteren Ausführungsform des Planetengetriebes ist jeder Lagerring drehfest an der jeweils angrenzenden Planetenträgerwange angebracht. Die Gleitlagerung ergibt sich demnach zwischen der verbleibenden Außenoberfläche des jeweiligen Lagerrings und der angrenzenden Stirnseite des Planetenrads. Die Stirnseite des Planetenrads kommt direkt zum Zusammenwirken mit der entsprechenden Oberfläche des Lagerrings in Betracht. Bei einer grundsätzlich ebenfalls möglichen Anbringung des Lagerrings am Planetenrad würde die Außenoberfläche des Lagerrings mit dem angrenzenden Abschnitt der Oberfläche der jeweiligen Planetenträgerwange zusammenwirken. Weil diese häufig aus einem Gussmaterial gefertigt ist, ist eine zusätzliche Oberflächenvergütung erforderlich, damit die Oberfläche als Gleitlagerelement verwendbar ist.

Das hier vorgeschlagene Planetengetriebe kommt speziell - wenn auch nicht ausschließlich - zur Verwendung in einer Windkraftanlage in Betracht. Insoweit ist die hier vorgeschlagene Neuerung auch eine Windkraftanlage mit einem Planetengetriebe wie hier und im Folgenden beschrieben.

Aufgrund der jetzt möglichen lichten Weite zwischen den beiden Planetenträgerwangen und der im Vergleich dazu zumindest im Bereich der Verzahnung nahezu gleich großen Breite des Planetenrads ist ein Anbringen der Lagerringe an den Planetenträgerwangen und ein anschließendes Einführen des Planetenrads zwischen die Planetenträgerwangen nicht mehr möglich. Die hier vorgeschlagene Neuerung ist demnach auch ein Verfahren zum Montieren eines Planetenrads in einem Planetengetriebe der hier und im Folgenden beschriebenen Art. Bei dem Verfahren wird zunächst in einem ersten Verfahrensschritt jeweils ein Lagerring seitlich am Planetenrad in jeweils einem im Planetenrad gebildeten Axiallagerraum positioniert. Anschließend wird in einem zweiten Verfahrensschritt das Planetenrad mit den beiden Lagerringen in einer Bewegungsrichtung quer zur Richtung einer Drehachse des Planetenrads zwischen den Planetenträgerwangen positioniert. Abschließend wird in einem dritten Verfahrensschritt das so positionierte Planetenrad durch Einführen eines als Planetenradachse fungierenden Planetenradbolzens im Planetenträger fixiert. Das Planetenrad wird also zusammen mit den Lagerringen in den Zwischenraum zwischen den Planetenträgerwangen eingeführt. Dass die Planetenträgerwangen jetzt in einer Stärke ausgeführt werden können, dass der dazwischen verbleibende Abstand gerade zum Einführen eines Planetenrads ausreicht, spielt dann keine Rolle mehr. Ein Anbringen der Lagerringe an den Planetenträgerwangen und ein nachfolgendes Einführen des Planetenrads ist dagegen genauso wenig möglich wie ein Einführen der Lagerringe bei einem bereits in dem Zwischenraum zwischen den Planetenträgerwangen befindlichen Planetenrad.

Bei einer Ausführungsform des Verfahrens werden die Lagerringe an den Planetenträgerwangen fixiert, nachdem das Planetenrad mit den seitlich am Planetenrad positionierten Lagerringen zwischen den Planetenträgerwangen positioniert ist. Als Gleitlagerflächen fungieren dann die verbleibende Oberfläche des Lagerrings und der angrenzende Abschnitt der Stirnfläche des Planetenrads. Der betreffende Abschnitt der Stirnfläche kommt - wie oben bereits beschrieben - unmittelbar zur Verwendung als Gleitlagerfläche in Betracht. Grundsätzlich ebenfalls möglich wäre eine Fixierung jedes Lagerrings am Planetenrad und zwar im Zusammenhang mit dem ersten Verfahrensschritt und dem dort erfolgenden Positionieren jeweils eines Lagerrings seitlich am Planetenrad in jeweils einem Axiallagerraum. Dann fungieren die verbleibende Oberfläche des Lagerrings und ein angrenzender Oberflächenabschnitt der Planetenträgerwange als Gleitlagerflächen. Für den Oberflächenabschnitt der Planetenträgerwange ist gegebenenfalls eine zusätzliche Vergütung oder das Anbringen eines als Gleitlagerfläche in Betracht kommenden Werkstoffs erforderlich.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: einen geschnittenen Ausschnitt aus einem Planetengetriebe,
- FIG 2: einen Ablauf beim Montieren eines Planetenrads in einem Planetengetriebe.

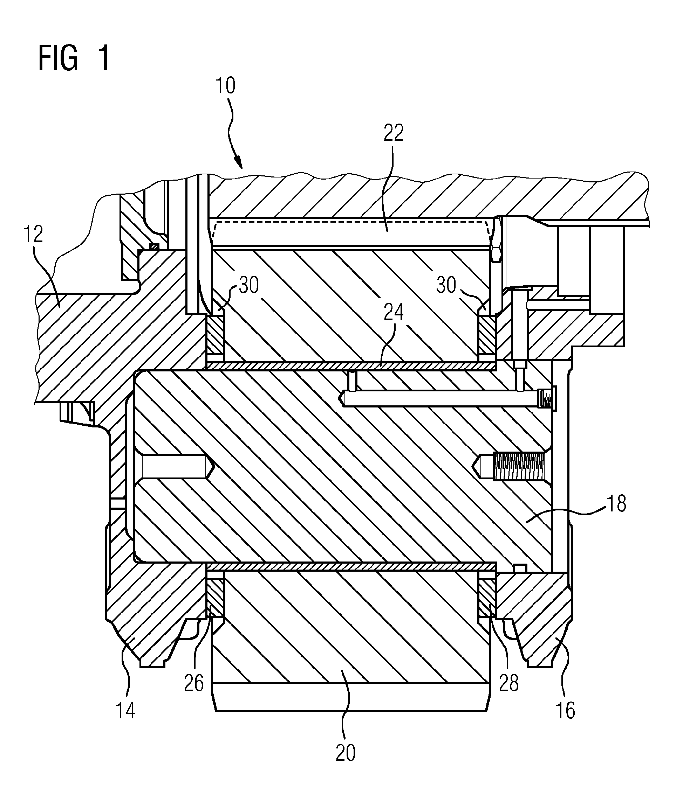

Die Darstellung in FIG 1 zeigt einen geschnittenen Ausschnitt aus einem Planetengetriebe 10, ähnlich wie dies zum Beispiel in der EP 2 383 480 A1 beschrieben ist, auf die zur Vermeidung einer Beschreibung von hier eher nachrangigen Details verwiesen wird.

Gezeigt sind ein Planetenträger 12, ein von zwei Wangen (Planetenträgerwangen 14, 16) gehaltener und als Planetenradachse fungierender Planetenradbolzen 18 (Planetenbolzen), ein Planetenrad 20 und eine Zahnflanke eines mit dem Planetenrad 20 kämmenden Sonnenrads 22.

Zur radialen Lagerung des Planetenrads 20 am Planetenbolzen 18 ist ein Radialgleitlager 24 vorgesehen. Zur axialen Lagerung des Planetenrads 20 sind an den seitlichen Stirnflächen des Planetenrads 20 zwischen der jeweiligen Stirnfläche und der benachbarten Planetenträgerwange 14, 16 als Axialgleitlager fungierende Lagerringe 26, 28 vorgesehen.

Gemäß dem hier vorgeschlagenen Ansatz wird der für die Lagerringe 26, 28 benötigte Bauraum geschaffen, indem der Radkörper des Planetenrads 20 in seiner Breite reduziert wird. Die Reduzierung der Radkörperbreite ist in radialer Richtung durch einen zur Aufnahme der Lagerringe 26, 28 hinreichend großen Durchmesser begrenzt, welcher jedoch ausreichend radialen Abstand zur im äußeren Bereich des Planetenrads 20 befindlichen Verzahnung aufweist. Der resultierende Raum in Form einer Ausnehmung (Hinterschnitt) am Radkörper des Planetenrads 20 wird als Axiallagerraum 30 bezeichnet.

Im Vergleich zu der aus der EP 2 383 480 A1 bekannten Konfiguration, bei der der Bauraum für die dortigen Lagerringe in den Wangen des Planetenträgers geschaffen wurde, ergibt sich bei der hier vorgeschlagenen Lösung eine erhöhte Einspannlänge des Planetenbolzens 18 (jedes Planetenbolzens 18). Darüber hinaus wird die mit der Schaffung von Bauraum für die Lagerringe 26, 28 in den Planetenträgerwangen 14, 16 einhergehende herabgesetzte mechanische Belastbarkeit des Planetenträgers 12 vermieden. Vermieden wird auch die für die Schaffung von Bauraum für die Lagerringe 26, 28 in den Planetenträgerwangen 14, 16 notwendige und aufwändige spanende Zusatzbearbeitung des Planetenträgers 12.

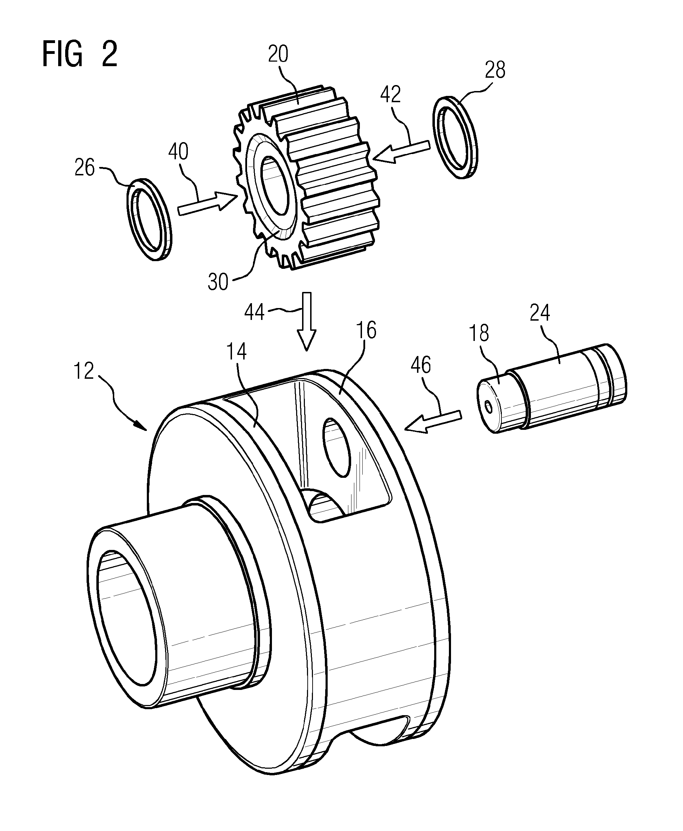

Die Darstellung in FIG 2 zeigt in schematisch vereinfachter Art und Weise einen Ablauf beim Montieren eines Planetenrads 20 in einem Planetenträger 12 eines Planetengetriebes 10. Das Planetenrad 20 weist gemäß dem hier vorgeschlagenen Ansatz jeweils seitlich einen Axiallagerraum 30 zur Aufnahme jeweils eines Lagerrings 26, 28 auf. In einem ersten Verfahrensschritt (Blockpfeile 40, 42) wird entsprechend jeweils ein Lagerring 26, 28 seitlich am Planetenrad 20 in dem dortigen Axiallagerraum 30 positioniert. Daraufhin (Blockpfeil 44) wird das Planetenrad 20 mit den beiden Lagerringen 26, 28 in einer Bewegungsrichtung quer zur Richtung einer Drehachse des Planetenrads 20 zwischen den Planetenträgerwangen 14, 16 positioniert. Abschließend (Blockpfeil 46) wird ein so positioniertes Planetenrad (20) durch Einführen eines als Planetenradachse fungierenden Planetenradbolzens 18 im Planetenträger 12 fixiert. Dies wird für alle Planetenräder 20 wiederholt, bis der Planetenträger 12 vollständig bestückt ist.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Planetengetriebe 10, insbesondere ein Planetengetriebe 10 für eine Windkraftanlage, eine Windkraftanlage mit einem Planetengetriebe 10 sowie ein Verfahren zum Montieren eines Planetengetriebes 10. Das Planetengetriebe 10 umfasst einen Planetenträger 12 mit zwei jeweils zumindest einen Planetenradbolzen 18 fixierenden Planetenträgerwangen 14, 16. Der oder jeder Planetenradbolzen 18 trägt jeweils ein Planetenrad 20. Zwischen dem Planetenrad 20 und jeweils einer Planetenträgerwange 14, 16 ist jeweils ein als Axialgleitlager fungierender Lagerring 26, 28 angeordnet, welcher in einem aufgrund einer reduzierten Breite des Planetenrads 20 resultierenden Axiallagerraum 30 angeordnet ist.

## Patentansprüche

1. Planetengetriebe (10) für eine Windkraftanlage,
wobei das Planetengetriebe (10) einen Planetenträger (12) mit zwei jeweils zumindest einen Planetenradbolzen (18) fixierenden Planetenträgerwangen (14, 16) umfasst,
wobei der oder jeder Planetenradbolzen (18) ein Planetenrad (20) trägt und
wobei zwischen dem Planetenrad (20) und jeweils einer Planetenträgerwange (14, 16) jeweils ein als Axialgleitlager fungierender Lagerring (26, 28) angeordnet ist,
**dadurch gekennzeichnet,**
**dass** jeder Lagerring (26, 28) in einem aufgrund einer reduzierten Breite des Planetenrads (20) resultierenden Axiallagerraum (30) angeordnet ist.

2. Planetengetriebe (10) nach Anspruch 1, wobei der Axiallagerraum (30) ausgehend von einem kleinsten Radius des Planetenrads (20) beginnt.

3. Planetengetriebe (10) nach Anspruch 1 oder 2, wobei jeder Lagerring (26, 28) drehfest an der jeweils angrenzenden Planetenträgerwange (14, 16) angebracht ist.

4. Planetengetriebe (10) nach Anspruch 1 oder 2, wobei jeder Lagerring (26, 28) drehfest an der jeweiligen Stirnfläche des Planetenrads (20) angebracht ist.

5. Windkraftanlage mit einem Planetengetriebe (10) nach einem der Ansprüche 1, 2, 3 oder 4.

6. Verfahren zum Montieren eines Planetenrads (20) in einem Planetengetriebe (10) nach einem der Ansprüche 1, 2 oder 3,
wobei jeweils ein Lagerring (26, 28) seitlich am Planetenrad (20) positioniert wird,
wobei das Planetenrad (20) mit den beiden Lagerringen (26, 28) in einer Bewegungsrichtung quer zur Richtung einer Drehachse des Planetenrads (20) zwischen den Planetenträgerwangen (14, 16) positioniert wird und
wobei ein so positioniertes Planetenrad (20) durch Einführen eines als Planetenradachse fungierenden Planetenradbolzens (18) im Planetenträger (12) fixiert wird.

7. Verfahren nach Anspruch 6,
wobei die Lagerringe (26, 28) an den Planetenträgerwangen (14, 16) fixiert werden, nachdem das Planetenrad (20) mit den seitlich am Planetenrad (20) positionierten Lagerringen (26, 28) zwischen den Planetenträgerwangen (14, 16) positioniert ist.
